# EUROPÄISCHE PATENTSCHRIFT

(11) **EP 3 418 174 B1**
(45) Veröffentlichungstag und Bekanntmachung des Hinweises auf die Patenterteilung: **01.01.2020**
(21) Anmeldenummer: 18163149.0
(22) Anmeldetag: 21.03.2018
(51) Int. Cl.: B62M 6/45, B62M 6/55

(54) **STEUERUNGSVERFAHREN FÜR EINEN ANTRIEBSMOTOR, STEUERGERÄT UND ZWEIRAD**
CONTROL METHOD FOR A DRIVE ENGINE, CONTROL DEVICE AND BICYCLE
PROCÉDÉ DE COMMANDE D'UN MOTEUR D'ENTRAÎNEMENT, APPAREIL DE COMMANDE ET DEUX ROUES

(30) Priorität: 23.06.2017 DE 102017210593
(43) Veröffentlichungstag der Anmeldung: 26.12.2018
(73) Patentinhaber: Robert Bosch GmbH, 70442 Stuttgart (DE)
(72) Erfinder: Dackermann, Tim, 72072 Tuebingen (DE); Geyer, Florian, 72555 Metzingen (DE)

(56) Entgegenhaltungen:
- DE-A1-102011 077 181

## Beschreibung

Die vorliegende Erfindung betrifft ein Steuerungsverfahren für einen Antriebsmotor eines Zweirads und ein Steuergerät, welches dazu eingerichtet ist, das Steuerungsverfahren durchzuführen. Des Weiteren betrifft die Erfindung ein Zweirad mit dem Steuergerät.

### Stand der Technik

Die Schrift EP 0 590 674 A1 beschreibt ein Steuerungsverfahren für einen Elektromotor eines Elektrofahrrads in Abhängigkeit von erfassten Trittgrößen des Fahrradfahrers und einer erfassten Geschwindigkeit des Elektrofahrrads. Das Dokument DE102011077181 A1 offenbart die Präambel der unabhängigen Ansprüche 1 und 6.

Die Aufgabe der vorliegenden Erfindung ist es, die Lebensdauer eines Getriebes eines Zweiradantriebs zu verlängern, wobei das Zweirad insbesondere ein Elektrofahrrad ist.

### Offenbarung der Erfindung

Die vorliegende Erfindung betrifft ein Steuerungsverfahren für einen Antriebsmotor eines Zweirads in Abhängigkeit eines Getriebeverschleißes, insbesondere ist der Antriebsmotor ein Elektromotor. Die Erfindung betrifft auch ein Steuergerät, welches dazu eingerichtet ist, das Steuerungsverfahren durchzuführen. Des Weiteren betrifft die Erfindung ein Zweirad, insbesondere ein Elektrofahrrad, mit dem Steuergerät. Das Zweirad ist dazu eingerichtet, wenigstens teilweise mittels einer Trittkraft des Zweiradfahrers auf Pedale des Zweirads und mittels eines Motordrehmoments des Antriebsmotors angetrieben zu werden.

Das Steuerungsverfahren weist eine Erfassung von Trittgrößen auf. Die erfassten Trittgrößen repräsentieren die Betätigung der Pedale durch den Zweiradfahrer. Das Steuerungsverfahren weist des Weiteren eine Ermittlung einer Motordrehzahl des Antriebsmotors auf. Anschließend erfolgt eine Bestimmung eines Getriebeverschleißes eines Getriebes des Zweirads in Abhängigkeit der ermittelten Motordrehzahl. Zur Bestimmung wird beispielsweise ein Getriebeverschleiß in Abhängigkeit der ermittelten Motordrehzahl einer der Kategorien kein Verschleiß, niedriger Verschleiß, mittlerer Verschleiß oder hoher Verschleiß zugeordnet. Danach wird in einem weiteren Schritt der Antriebsmotor in Abhängigkeit der erfassten Trittgrößen und des bestimmten Getriebeverschleißes angesteuert. Dadurch kann vorteilhafterweise die Beschleunigung oder das Motordrehmoment bei einem hohen Getriebeverschleiß reduziert werden. Durch das Steuerungsverfahren resultiert der Vorteil, dass der Getriebeverschleiß des Getriebes des Zweirads bei der Ansteuerung des Antriebsmotors berücksichtigt wird, wodurch die Lebensdauer des Getriebes vorteilhafterweise deutlich verlängert bzw. ein Getriebeschaden vermieden wird.

In einer bevorzugten Ausgestaltung weist das Steuerungsverfahren eine Erfassung einer Rotorposition des Antriebsmotors auf. Anschließend erfolgt die Ermittlung der Motordrehzahl in Abhängigkeit der erfassten Rotorposition. Die Motordrehzahl kann in dieser Ausgestaltung vorteilhafterweise genau ermittelt werden. Alternativ oder optional kann die Motordrehzahl mittels eines Drehzahlsensors ermittelt werden.

In einer Ausführungsform weist das Steuerungsverfahren eine Erfassung einer Geschwindigkeit des Zweirads auf. Die Ansteuerung des Antriebsmotors erfolgt zusätzlich in Abhängigkeit der erfassten Geschwindigkeit. In dieser Ausführungsform wird das mittels des Antriebsmotors erzeugte Drehmoment vorteilhaft beispielsweise nur bei Geschwindigkeiten oberhalb eines Schwellenwertes und/oder beim Anfahren bzw. bei niedrigen Geschwindigkeiten reduziert, wodurch die Getriebebelastung reduziert wird.

In einer besonders bevorzugten Ausgestaltung ist die Ansteuerung des Antriebsmotors dazu eingerichtet, das Motordrehmoment auf einen Maximalwert zu begrenzen. Dadurch werden das Getriebe belastende Motordrehmomente vorteilhafterweise vermieden.

In einer weiteren Ausführung der Erfindung ist die Ansteuerung des Antriebsmotors beim Anfahren des Zweirads aus dem Stillstand dazu eingerichtet, das Motordrehmoment nach Ablauf einer Zeitspanne nach einer Fahrt aus dem Stillstand bzw. einen Fahrtbeginn auf einen Maximalwert zu begrenzen. Durch diese Ausführung resultiert für den Zweiradfahrer beim Anfahren aus dem Stillstand ein hohes Motordrehmoment bzw. ein hoher Anfahrkomfort. Nach Ablauf einer Zeitspanne bzw. einer Zeitdauer, beispielsweise nach 5 Minuten, wird das Motordrehmoment in Abhängigkeit des bestimmten Getriebeverschleißes auf den Maximalwert begrenzt, wodurch das Getriebe geschont und der Fahrkomfort für den Zweiradfahrer kaum beeinflusst wird.

Die Erfindung betrifft auch ein Steuergerät für das Zweirad. Das Steuergerät erfasst Trittgrößen mittels eines Trittgrößensensors und ermittelt die Motordrehzahl des Antriebsmotors, beispielsweise mittels eines Drehmomentsensors. Der Drehmomentsensor ist insbesondere am Antriebsmotor angeordnet. Das Steuergerät bestimmt des Weiteren den Getriebeverschleiß des Getriebes in Abhängigkeit der ermittelten Motordrehzahl, insbesondere mittels einer Recheneinheit. Das Steuergerät erzeugt ferner ein Steuersignal zur Ansteuerung des Antriebsmotors in Abhängigkeit der erfassten Trittgrößen und des bestimmten Getriebeverschleißes.

Optional erfasst das Steuergerät die Rotorposition des Antriebsmotors und ermittelt die Motordrehzahl zusätzlich in Abhängigkeit der erfassten Rotorposition.

Es kann vorgesehen sein, dass das Steuergerät eine Geschwindigkeit des Zweirads mittels eines Geschwindigkeitssensors und/oder eines Ortsensors erfasst, wobei das Steuergerät das Steuersignal zusätzlich in Abhängigkeit der erfassten Geschwindigkeit erzeugt.

Die vorliegende Erfindung wird nachfolgend anhand bevorzugter Ausführungsformen und beigefügter Zeichnungen erläutert.
- Figur 1:: Zweirad
- Figur 2:: Antriebsvorrichtung mit Getriebe
- Figur 3:: Ablaufdiagramm des Steuerungsverfahrens
- Figur 4:: Steuergerät
- Figur 5:: Diagramm des Motordrehzahlverlaufs
- Figur 6:: weiteres Diagramm des Motordrehzahlverlaufs

### Ausführungsbeispiele

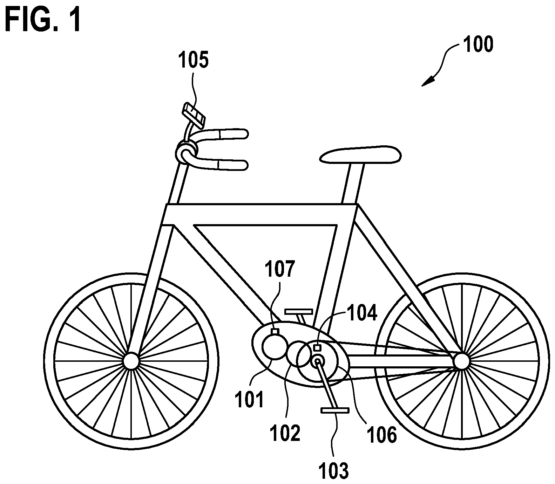

In Figur 1 ist ein Elektrofahrrad als Zweirad 100 skizziert. Das Elektrofahrrad 100 weist als Antriebsmotor einen Elektromotor 101 zum elektrischen Antrieb des Elektrofahrrads 100 und Pedale 103 zum Antrieb des Elektrofahrrads 100 mittels einer Trittkraft des Zweiradfahrers auf. Zwischen dem Elektromotor 101 und/oder den Pedalen 103 und einem Abtriebskettenblatt 106 ist ein Getriebe 102 angeordnet. Im Sinne dieser Erfindung ist das Getriebe 102 bevorzugt zwischen dem Elektromotor 101 und dem Abtriebskettenblatt 106 angeordnet. Das Getriebe 102 weist mindestens ein Übersetzungsverhältnis auf, wobei das Übersetzungsverhältnis konstant sein kann. Alternativ können beispielsweise durch ein Fixieren oder Lösen von Zahnrädern des Getriebes 102 mehrere diskrete Übersetzungsverhältnisse eingestellt werden. Das Getriebe 102 weist beispielsweise ein oder mehrere Zahnradpaare, ein Planetengetriebe und/oder ein CVT-Getriebe auf. Das Getriebe 102 kann über die Lebensdauer, beispielsweise nach einer Vielzahl von Betriebsstunden einen zunehmenden Getriebeverschleiß aufweisen. Beispielsweise können als Getriebeverschleiß die Zähne der Zahnräder im Getriebe 102 die ursprünglichen Oberflächeneigenschaften verändern, ihre ursprüngliche Form verlieren oder ein Zahn abbrechen. Bei einem erhöhten Getriebeverschleiß des Getriebes 102 wird ein Getriebeschaden bzw. der Ausfall des Getriebes wahrscheinlicher, insbesondere wenn mittels des Elektromotors 101 ein erhöhtes Motordrehmoment erzeugt wird beziehungsweise das Getriebe 102 mit hohen Drehmomenten des Elektromotors 101 und/oder mit hohen Trittkräften des Zweiradfahrers auf die Pedale 103 belastet wird. An dem Zweirad bzw. Elektrofahrrad 100 ist ferner ein Steuergerät 105 angeordnet. Das Steuergerät 105 ist dazu eingerichtet, den Elektromotor 101 beispielsweise in Abhängigkeit von Trittgrößen des Zweiradfahrers auf die Pedale 103 anzusteuern. Durch die Ansteuerung wird mittels des Elektromotors 101 in Abhängigkeit von den Trittgrößen ein Motordrehmoment erzeugt. Die Trittgrößen werden vor der Ansteuerung des Elektromotors 101 mittels eines Trittgrößensensors 104 erfasst. Es kann ferner an dem Elektrofahrrad 100 ein Drehzahlsensor 107 vorgesehen sein. Der Drehzahlsensor 107 kann an dem Elektromotor 101 angeordnet sein. Der Drehzahlsensor 107 ist dazu eingerichtet, die Drehzahl des Elektromotors 101 zu erfassen. Alternativ oder optional kann vorgesehen sein, die Rotorposition zu erfassen und die Motordrehzahl in Abhängigkeit der erfassten Rotorposition zu ermitteln. Die Rotorposition wird beispielsweise mittels Hallsensoren, TMR- und/oder AMR-Sensoren ermittelt.

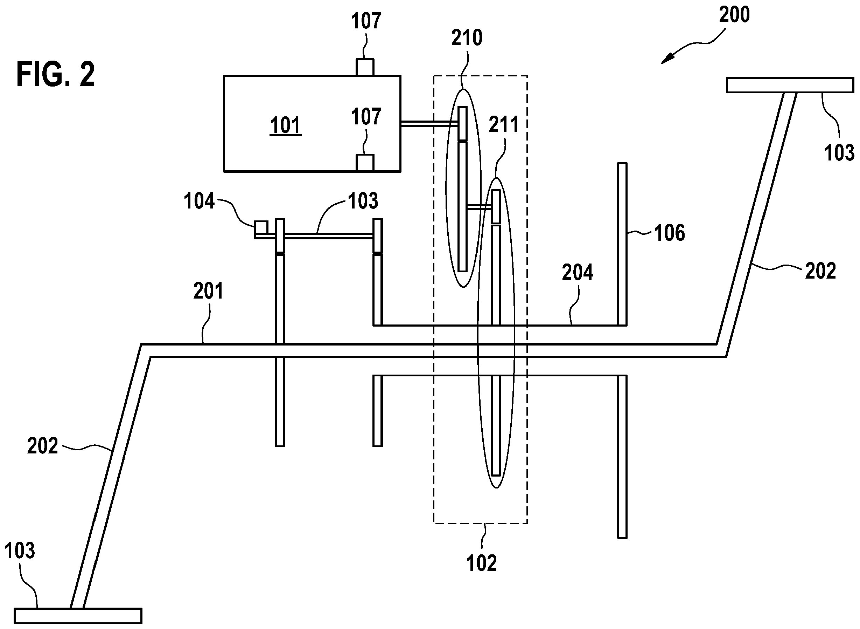

In Figur 2 ist eine Antriebsvorrichtung 200 mit dem Elektromotor 101, einer Kurbelwelle 201 mit zwei Kurbeln 202 mit den Pedalen 103, dem Abtriebskettenrad 106, einer Sensorwelle 203 und einer Hohlwelle 204 dargestellt. Die Sensorwelle 203 überträgt das Drehmoment der Kurbelwelle 201, welches dem Fahrerdrehmoment entspricht, an die Hohlwelle 204, wobei an der Sensorwelle 203 mittels eines Trittgrößensensors 104 das Fahrerdrehmoment beziehungsweise die Trittgrößen des Zweiradfahrers erfasst werden. Die erfassten Trittgrößen repräsentieren somit eine Betätigung der Pedale 103 durch den Zweiradfahrer. Das Abtriebskettenrad 106 ist drehfest mit der Hohlwelle 204 verbunden. Die Hohlwelle 204 summiert das durch den Zweiradfahrer über die Pedale 103 aufgebrachte Fahrerdrehmoment der Kurbelwelle 201 sowie das mittels des Elektromotors 101 erzeugte Motordrehmoment zu einem Antriebsdrehmoment, welches an das Abtriebskettenrad 106 übertragen wird. Zwischen dem Elektromotor 101 und der Hohlwelle 204 sind eine erste Übersetzungsstufe beziehungsweise ein erstes Zahnradpaar 210 und eine zweite Übersetzungsstufe beziehungsweise ein zweites Zahnradpaar 211 angeordnet. Das erste Zahnradpaar 210 und das zweite Zahnradpaar 211 bilden beispielsweise das Getriebe 102. Das Getriebe 102 reduziert mittels des ersten Zahnradpaares 210 und mittels des zweiten Zahnradpaares 211 die Motordrehzahl des Elektromotors 101, so dass die Hohlwelle 204 wesentlich langsamer als der Rotor des Elektromotors 101 dreht und der Elektromotor 101 effizient mit einer hohen Motordrehzahl betrieben werden kann. Die Motordrehzahl und/oder eine Drehzahl der ersten Übersetzungsstufe und/oder der zweiten Übersetzungsstufe wird beispielsweise mit einem Drehzahlsensor 107 erfasst. Alternativ oder optional kann es vorgesehen sein mehrere, bevorzugt drei, Positionssensoren 108 am Elektromotor 101 anzuordnen, welche die Rotorposition x erfassen. Die Motordrehzahl n kann dann in Abhängigkeit der Rotorposition x ermittelt werden.

Nach einer Vielzahl von Betriebsstunden beziehungsweise über die Lebensdauer des Getriebes 102 kann es vorkommen, dass ein Getriebeverschleiß des Getriebes 102 auftritt. Der Getriebeverschleiß ist beispielsweise eine Veränderung einer Zahnoberfläche und/oder einer Zahnform der Zähne des ersten Zahnradpaares 210 und/oder des zweiten Zahnradpaares 211.

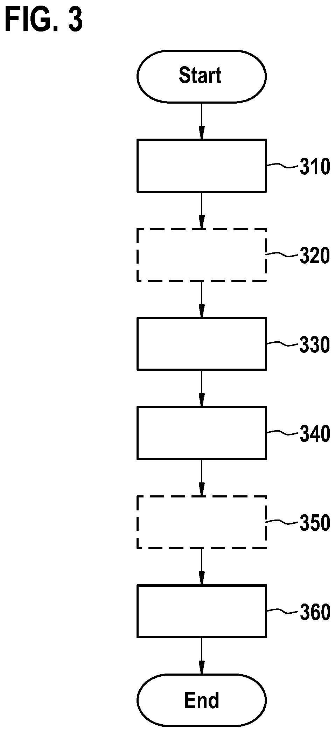

In Figur 3 ist ein Ablaufdiagramm des Steuerungsverfahrens dargestellt. In einem Schritt 310 des Steuerungsverfahrens erfolgt die Erfassung 310 von Trittgrößen mittels des Trittgrößensensors 104. In einem weiteren Schritt 330 des Steuerungsverfahrens wird die Motordrehzahl n des Antriebsmotors 101 ermittelt. Es kann vorgesehen sein, dass in einem optionalen Schritt 320, vor einer Ermittlung 330 der Motordrehzahl, eine Erfassung 330 einer Rotorposition x des Antriebsmotors 101 vorgesehen ist und die Ermittlung der Motordrehzahl in Abhängigkeit der erfassten Rotorposition x erfolgt. Alternativ oder optional kann die Motordrehzahl bzw. die Drehzahl des Rotors in Abhängigkeit mittels eines Drehzahlsensors 107 der ersten Übersetzungsstufe und/oder der zweiten Übersetzungsstufe ermittelt werden.

Anschließend erfolgt die Bestimmung 340 des Getriebeverschleißes des Getriebes 102 in Abhängigkeit der ermittelten Motordrehzahl n. Die Bestimmung 340 kann beispielsweise durch eine Frequenzanalyse der ermittelten Motordrehzahl n erfolgen. Falls niedrigere oder höhere Frequenzen der durchschnittlichen Motordrehzahl auftreten kann beispielsweise auf einen Getriebeverschleiß geschlossen werden. Alternativ kann die Ermittlung durch eine Peak-Analyse der Motordrehzahl n erfolgen. Falls die Motordrehzahl kurzzeitig einen erhöhten Wert aufweist, kann beispielsweise ein fehlender Zahn eines Zahnrads einer Übersetzungsstufe, das heißt ein vorliegender Getriebeverschleiß, ermittelt werden.

In einem weiteren optionalen Schritt 350 kann eine Geschwindigkeit v des Zweirads erfasst werden. Die Erfassung der Geschwindigkeit des Zweirads erfolgt beispielsweise mittels eines Reed-Sensors und/oder eines GPS-Sensors. Abschließend wird eine Ansteuerung 360 des Elektromotors 101 in Abhängigkeit der erfassten Trittgrößen und des bestimmten Getriebeverschleißes durchgeführt. Optional kann die Ansteuerung 360 zusätzlich in Abhängigkeit der erfassten Geschwindigkeit v erfolgen.

Für die Ansteuerung 360 wird demnach der Getriebeverschleiß des Getriebes 102 berücksichtigt. Beispielsweise ist die Ansteuerung 360 des Elektromotors beziehungsweise des Antriebsmotors 101 dazu eingerichtet ist, das Motordrehmoment auf einen Maximalwert zu begrenzen. Dadurch wird die mechanische Belastung des Getriebes 102 reduziert und der Getriebeverschleiß beziehungsweise das Risiko eines Getriebeschadens somit gesenkt.

Um den Fahrkomfort für den Zweiradfahrer nicht einschränken zu müssen, kann es vorgesehen sein, dass beim Anfahren des Zweirads 100 aus dem Stillstand der Antriebsmotor 101 zunächst in Abhängigkeit der Trittgrößen angesteuert und das Motordrehmoment erst nach einer Zeitspanne (t) nach dem Fahrtbeginn auf einen Maximalwert in Abhängigkeit des Getriebeverschleißes begrenzt wird.

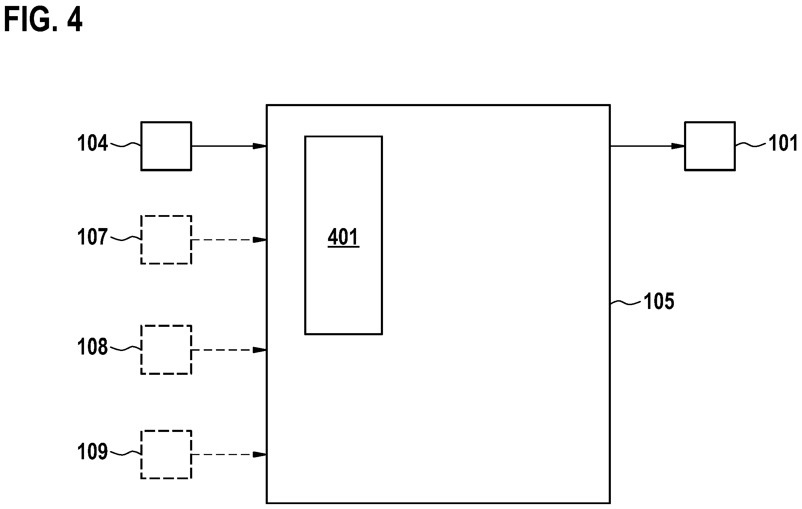

In Figur 4 ist das Steuergerät 105 als vereinfachtes Blockschaltbild dargestellt. Das Steuergerät 105 erfasst Trittgrößen mittels eines Trittgrößensensors 104. Es kann vorgesehen sein, dass das Steuergerät 105 die Motordrehzahl n des Elektromotors beziehungsweise des Antriebsmotor 101 ermittelt, beispielsweise mittels eines Drehzahlsensors 107, welcher die Drehzahl des Rotors bzw. der Motordrehzahl n und/oder der ersten Übersetzungsstufe 210 und/oder der zweiten Übersetzungsstufe 211 erfasst. Optional oder alternativ kann es vorgesehen sein, dass die Rotorposition x von dem Steuergerät 105 erfasst wird. Die Rotorposition x wird von einem beziehungsweise mehreren Positionssensoren 108 erfasst. Der Positionssensor 108 kann beispielsweise am Elektromotor 101 angeordnet sein. Die Motordrehzahl n wird beispielsweise in Abhängigkeit der erfassten Rotorposition mittels einer Recheneinheit 401 ermittelt. Optional kann es vorgesehen sein, dass die Geschwindigkeit v des Elektrofahrrads 100 von dem Steuergerät 105 erfasst wird. Die Geschwindigkeit v des Elektrofahrrads 101 wird mittels eines Geschwindigkeitssensors 109, beispielsweise mittels eines Reed-Sensors und/oder eines Ortssensors, beispielsweise eines GPS-Sensors, erfasst. Das Steuergerät 105 bestimmt, bevorzugt mittels der Recheneinheit 401, in Abhängigkeit der erfassten Trittgrößen und der ermittelten Motordrehzahl n einen Getriebeverschleiß des Getriebes 102. Das Steuergerät 105 erzeugt des Weiteren ein Steuersignal zur Ansteuerung des Antriebsmotors beziehungsweise des Elektromotors 101 in Abhängigkeit des bestimmten Getriebeverschleißes und der erfassten Trittgrößen. Beispielsweise wird das mittels des Elektromotors 101 erzeugte Motordrehmoment M in Abhängigkeit des bestimmten Getriebeverschleißes trotz eines erfassten großen Fahrerdrehmomentes auf einen Maximalwert Mₘₐₓ begrenzt, wodurch eine hohe mechanische Belastung des Getriebes 102 vermieden wird.

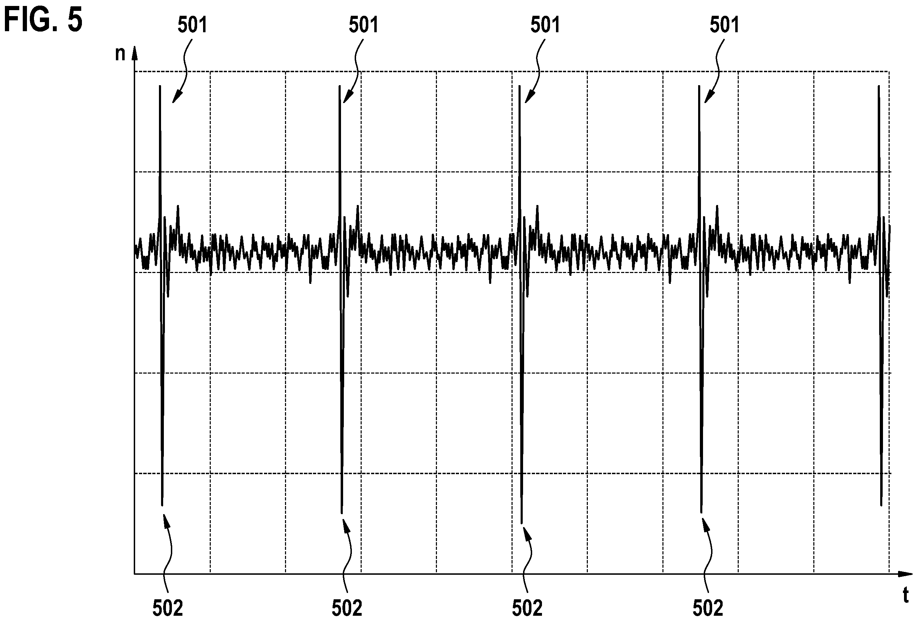

In Figur 5 ist ein Diagramm des Verlaufs der Motordrehzahl n in Abhängigkeit der Zeit t dargestellt. Der Motordrehzahlverlauf weist eine in periodischen Abständen erhöhte Drehzahl 501 bzw. eine erniedrigte Drehzahl 502 bzw. nach Ablauf von festen Zeitspannen regelmäßig starke Abweichungen vom Mittelwert der Motordrehzahl n auf. Die erhöhte Drehzahl 501 repräsentiert eine Schädigung eines bestimmten Zahns bzw. einen Einzelzahndefekt des Getriebes bzw. der ersten Übersetzungsstufe 210 und/oder der zweiten Übersetzungsstufe 211. Beispielsweise ist die Frequenz der erhöhten Drehzahl 501 ein Vielfaches der Getriebeübersetzung. Zeitgleich zur erhöhten Drehzahl 501 bzw. zur erniedrigen Drehzahl 502 weist das Motordrehmoments M Schwankungen auf, wodurch der beschädigte Zahn weiter verstärkt belastet wird. Es liegt folglich ein Getriebeverschleiß der ersten Übersetzungsstufe 210 und/oder der zweiten Übersetzungsstufe 211 vor. Der Getriebeverschleiß würde mit der Zeit zunehmen bzw. verstärkt, wobei eine Zunahme des Getriebeverschleißes durch das erfindungsgemäße Steuerungsverfahren zumindest reduziert werden kann. Falls der beschädigte Zahn bricht, kann dies zu einem Getriebeschaden führen.

Für einen Verlauf der Motordrehzahl n gemäß Figur 5 wird in dem Schritt 330 des Steuerungsverfahrens die Motordrehzahl n des Antriebsmotors 101 ermittelt. Anschließend erfolgt die Bestimmung 340 des Getriebeverschleißes des Getriebes 102 in Abhängigkeit der ermittelten Motordrehzahl n, wobei ein Einzelzahndefekt des Getriebes erkannt wird. Die Erkennung des Einzelzahndefektes erfolgt beispielsweise in Abhängigkeit einer Überschreitung eines ersten Schwellenwertes der ermittelten Motordrehzahl n, welcher einen Toleranzwert zum Mittelwert des erzeugten Motordrehmoments repräsentiert. Abschließend wird eine Ansteuerung 360 des Elektromotors 101 in Abhängigkeit des bestimmten Getriebeverschleißes und in Abhängigkeit einer erfassten Rotorposition x durchgeführt. Dadurch wird das mittels des Elektromotors 101 erzeugte Motordrehmoment M kurz vor dem Einzelzahndefekt reduziert, beispielsweise erfolgt die Reduktion auf ein Motordrehmoment kleiner der Hälfte des Mittelwertes des Motordrehmoments. Die Ansteuerung 360 verringert somit zwar das mittlere abgegebene Motordrehmoment, ist aber für den Zweiradfahrer nicht wahrnehmbar. Der Einzelzahndefekt bzw. die vorgeschädigten Zähne werden durch diese Ansteuerung nicht weiter überproportional stark beansprucht und die Lebenszeit des Getriebes wird verlängert. Überschreitet die Amplitude der Motordrehzahl n einen zweiten Schwellenwert, kann nach der Bestimmung 340 des Getriebeverschleißes optional eine Anzeige 370 einer Fehlermeldung an den Zweiradfahrer erfolgen. Dies verhindert nicht den Ausfall des Getriebes 102, jedoch gegebenenfalls einen Defekt des Zweirads 100 während der Fahrt.

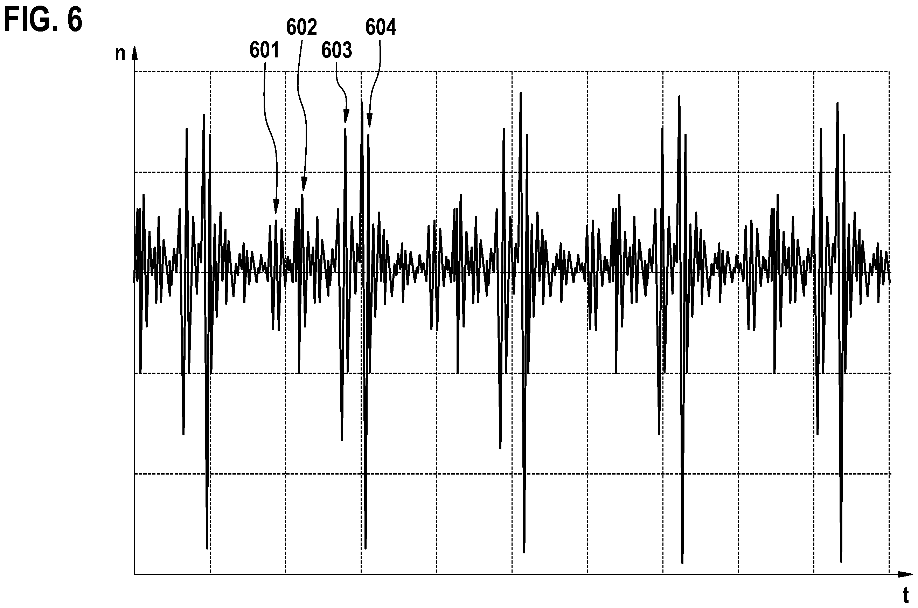

In Figur 6 ist ein weiteres Diagramm des Verlaufs der Motordrehzahl n in Abhängigkeit der Zeit t dargestellt, wobei mehrere Einzelzahndefekte 601, 602, 603 und 604 vorliegen. Die Ansteuerung 360 des Elektromotors 101 erfolgt in diesem Ausführungsbeispiel in Abhängigkeit des bestimmten Getriebeverschleißes, d.h. der bestimmten Einzelzahndefekte 601, 602, 603 und 604, und in Abhängigkeit der erfassten Rotorposition x, so dass jeweils kurz vor einem Einzelzahndefekt das Motordrehmoment M reduziert wird.

## Patentansprüche

1. Steuerungsverfahren für einen Antriebsmotor (101) eines Zweirads (100), wobei das Zweirad (100) dazu eingerichtet ist, wenigstens teilweise mittels einer Trittkraft des Zweiradfahrers auf Pedale (103) des Zweirads (100) und motorisch mittels eines Motordrehmoments des Antriebsmotors (101) angetrieben zu werden, wobei das Steuerungsverfahren die folgenden Schritte aufweist
• Erfassung (310) von Trittgrößen, die die Betätigung der Pedale (103) durch den Zweiradfahrer repräsentieren, und
• Ermittlung (330) einer Motordrehzahl (n) des Antriebsmotors (101),
**dadurch gekennzeichnet, dass** das Steuerungsverfahren die folgenden Schritte aufweist
• Bestimmung (340) eines Getriebeverschleißes eines Getriebes (102) in Abhängigkeit der ermittelten Motordrehzahl (n), und
• Ansteuerung (360) des Antriebsmotors (101) in Abhängigkeit der erfassten Trittgrößen und des bestimmten Getriebeverschleißes.

2. Steuerungsverfahren nach Anspruch 1, **dadurch gekennzeichnet, dass** das Steuerungsverfahren die folgenden Schritte aufweist
• Erfassung (320) einer Rotorposition (x) des Antriebsmotors (101), und
• Ermittlung (330) der Motordrehzahl (n) des Antriebsmotors (101 in Abhängigkeit der erfassten Rotorposition (x).

3. Steuerungsverfahren nach einem der vorhergehenden Ansprüche, **dadurch gekennzeichnet, dass** das Steuerungsverfahren die folgenden Schritte aufweist
• Erfassung (350) einer Geschwindigkeit (v) des Zweirads (100), und
• Ansteuerung (360) des Antriebsmotors (110) zusätzlich in Abhängigkeit der erfassten Geschwindigkeit (v).

4. Steuerungsverfahren nach einem der vorhergehenden Ansprüche, **dadurch gekennzeichnet, dass** die Ansteuerung (360) des Antriebsmotors (101) dazu eingerichtet ist, das Motordrehmoment auf einen Maximalwert zu begrenzen.

5. Steuerungsverfahren nach einem der vorhergehenden Ansprüche, **dadurch gekennzeichnet, dass** die Ansteuerung (360) des Antriebsmotors (101) beim Anfahren des Zweirads (100) aus dem Stillstand dazu eingerichtet ist, das Motordrehmoment nach einer Zeitspanne (t) nach dem Fahrtbeginn auf einen Maximalwert zu begrenzen.

6. Steuergerät (105) für ein Zweirad (100), wobei das Zweirad (100) dazu eingerichtet ist, wenigstens teilweise mittels einer Trittkraft des Zweiradfahrers auf Pedale (103) des Zweirads (100) und motorisch mittels eines Motordrehmoments des Antriebsmotors (101) angetrieben zu werden, wobei das Steuergerät (105)
• Trittgrößen mittels eines Trittgrößensensors (104) erfasst, wobei die Trittgrößen die Betätigung der Pedale (103) durch den Zweiradfahrer repräsentieren, und
• eine Motordrehzahl (n) des Antriebsmotors (101) ermittelt,
**dadurch gekennzeichnet, dass** das Steuergerät (105)
• einen Getriebeverschleiß eines Getriebes (102) in Abhängigkeit der ermittelten Motordrehzahl (n) bestimmt, und
• ein Steuersignal zur Ansteuerung des Antriebsmotors (101) in Abhängigkeit der erfassten Trittgrößen und des bestimmten Getriebeverschleißes erzeugt.

7. Steuergerät (105) nach Anspruch 6, **dadurch gekennzeichnet, dass** das Steuergerät (105)
• eine Rotorposition (x) des Antriebsmotors (101) erfasst, und
• die Motordrehzahl (n) des Antriebsmotors (101) in Abhängigkeit der erfassten Rotorposition (x) ermittelt.

8. Steuergerät (105) nach einem der Ansprüche 6 oder 7, **dadurch gekennzeichnet, dass** das Steuergerät (105)
• eine Geschwindigkeit (v) des Zweirads (100) erfasst, und
• das Steuersignal zusätzlich in Abhängigkeit der erfassten Geschwindigkeit (v) erzeugt.

9. Steuergerät (105) nach einem der Ansprüche 6 bis 8, **dadurch gekennzeichnet, dass** das erzeugte Steuersignal dazu eingerichtet ist, das erzeugte Motordrehmoment auf einen Maximalwert zu begrenzen.

10. Steuergerät (105) nach einem der Ansprüche 6 bis 9, **dadurch gekennzeichnet, dass** das Steuersignal beim Anfahren des Zweirads (100) aus dem Stillstand dazu eingerichtet ist, das Motordrehmoment nach einer Zeitspanne (t) nach dem Fahrtbeginn auf den Maximalwert zu begrenzen.

11. Zweirad mit dem Steuergerät (105) nach einem der Ansprüche 6 bis 10.

## Claims

1. Control method for a drive motor (101) of a two-wheeled vehicle (100), wherein the two-wheeled vehicle (100) is configured to be driven at least partially by means of pedal force of the rider of the two-wheeled vehicle on pedals (103) of the two-wheeled vehicle (100) and in a motor-driven fashion by means of a motor torque of the drive motor (101), wherein the control method comprises the following steps:
• acquiring (310) pedalling variables which represent the activation of the pedals (103) by the rider of the two-wheeled vehicle, and
• determining (330) a motor rotational speed (n) of the drive motor (101),
**characterized in that** the control method comprises the following steps:
• determining (340) a transmission wear of a transmission (102) in accordance with the determined motor rotational speed (n), and
• actuating (360) the drive motor (101) in accordance with the acquired pedalling variables and the determined transmission wear.

2. Control method according to Claim 1, **characterized in that** the control method comprises the following steps:
• acquiring (320) a rotor position (x) of the drive motor (101) and
• determining (330) the motor rotational speed (n) of the drive motor (101) in accordance with the acquired rotor position (x).

3. Control method according to one of the preceding claims, **characterized in that** the control method comprises the following steps:
• acquiring (350) a velocity (v) of the two-wheeled vehicle (100) and
• actuating (360) the drive motor (110) additionally in accordance with the acquired velocity (v).

4. Control method according to one of the preceding claims, **characterized in that** the actuation (360) of the drive motor (101) is configured to limit the motor torque to a maximum value.

5. Control method according to one of the preceding claims, **characterized in that** the actuation (360) of the drive motor (101) during the starting of the two-wheeled vehicle (100) from the stationary state is configured to limit the motor torque to a maximum value after a time period (t) after the start of travel.

6. Control device (105) for a two-wheeled vehicle (100), wherein the two-wheeled vehicle (100) is configured to be driven at least partially by means of a pedalling force of the rider of the two-wheeled vehicle on pedals (103) of the two-wheeled vehicle (100) and in a motor-driven fashion by means of a motor torque of the drive motor (101), wherein the control device (105)
• acquires pedalling variables by means of a pedalling variable sensor (104), wherein the pedalling variables represent the activation of the pedals (103) by the rider of the two-wheeled vehicle, and
• determines a motor rotational speed (n) of the drive motor (101),
**characterized in that** the control device (105)
• determines a transmission wear of a transmission (102) in accordance with the determined motor rotational speed (n), and
• generates a control signal for activating the drive motor (101) in accordance with the acquired pedalling variables and the determined transmission wear.

7. Control device (105) according to Claim 6, **characterized in that** the control device (105)
• acquires a rotor position (x) of the drive motor (101) and
• determines the motor rotational speed (n) of the drive motor (101) in accordance with the acquires rotor position (x).

8. Control device (105) according to one of Claims 6 and 7, **characterized in that** the control device (105)
• acquires a velocity (v) of the two-wheeled vehicle (100) and
• generates the control signal additionally in accordance with the acquired velocity (v).

9. Control device (105) according to one of Claims 6 to 8, **characterized in that** the generated control signal is configured to limit the generated motor torque to a maximum value.

10. Control device (105) according to one of Claims 6 to 9, **characterized in that** the control signal is configured, when starting the two-wheeled vehicle (100) from the stationary state, to limit the motor torque to the maximum value after a time period (t) after the start of travel.

11. Two-wheeled vehicle having the control device (105) according to one of Claims 6 to 10.

## Revendications

1. Procédé de commande pour un moteur d'entraînement (101) d'un deux-roues (100), le deux-roues (100) étant conçu pour être entraîné au moins partiellement au moyen d'une force de pédalage du conducteur de deux-roues sur des pédales (103) du deux-roues (100) et de manière motorisée au moyen d'un couple du moteur d'entraînement (101), le procédé de commande comprenant les étapes suivantes
• détection (310) de grandeurs de pédalage qui représentent l'actionnement des pédales (103) par le conducteur du deux-roues, et
• détermination (330) d'un régime (n) du moteur d'entraînement (101),
**caractérisé en ce que** le procédé de commande comprend les étapes suivantes
• détermination (340) d'une usure d'une transmission (102) en fonction du régime de moteur (n) déterminé, et
• commande (360) du moteur d'entraînement (101) en fonction des grandeurs de pédalage détectées et de l'usure de transmission déterminée.

2. Procédé de commande selon la revendication 1, **caractérisé en ce que** le procédé de commande comprend les étapes suivantes
• détection (320) d'une position de rotor (x) du moteur d'entraînement (101), et
• détermination (330) du régime (n) du moteur d'entraînement (101) en fonction de la position de rotor (x) détectée.

3. Procédé de commande selon l'une des revendications précédentes, **caractérisé en ce que** le procédé de commande comprend les étapes suivantes
• détection (350) d'une vitesse (v) du deux-roues (100), et
• commande (360) du moteur d'entraînement (110) en outre en fonction de la vitesse (v) détectée.

4. Procédé de commande selon l'une des revendications précédentes, **caractérisé en ce que** la commande (360) du moteur d'entraînement (101) est conçue pour limiter le couple de moteur à une valeur maximale.

5. Procédé de commande selon l'une des revendications précédentes, **caractérisé en ce que** la commande (360) du moteur d'entraînement (101) est conçue pour, lors du démarrage du deux-roues (100) à partir de l'arrêt, limiter le couple de moteur à une valeur maximale après un laps de temps (t) après le début de la conduite.

6. Appareil de commande (105) pour un deux-roues (100), le deux-roues (100) étant conçu pour être entraîné au moins partiellement au moyen d'une force de pédalage du conducteur de deux-roues sur des pédales (103) du deux-roues (100) et de manière motorisée au moyen d'un couple du moteur d'entraînement (101), dans lequel l'appareil de commande (105)
• détecte des grandeurs de pédalage au moyen d'un capteur (104) de grandeurs de pédalage, les grandeurs de pédalage représentant l'actionnement des pédales (103) par le conducteur du deux-roues, et
• détermine un régime (n) du moteur d'entraînement (101),
**caractérisé en ce que** l'appareil de commande (105)
• détermine une usure d'une transmission (102) en fonction du régime de moteur (n) déterminé, et
• produit un signal de commande pour la commande du moteur d'entraînement (101) en fonction des grandeurs de pédalage détectées et de l'usure de transmission déterminée.

7. Appareil de commande (105) selon la revendication 6, **caractérisé en ce que** l'appareil de commande (105)
• détecte une position de rotor (x) du moteur d'entraînement (101), et
• détermine le régime (n) du moteur d'entraînement (101) en fonction de la position de rotor (x) détectée.

8. Appareil de commande (105) selon la revendication 6 ou 7, **caractérisé en ce que** l'appareil de commande (105)
• détecte une vitesse (v) du deux-roues (100), et
• produit le signal de commande en outre en fonction de la vitesse (v) détectée.

9. Appareil de commande (105) selon l'une des revendications 6 à 8, **caractérisé en ce que** le signal de commande produit est conçu pour limiter le couple de moteur produit à une valeur maximale.

10. Appareil de commande (105) selon l'une des revendications 6 à 9, **caractérisé en ce que** le signal de commande est conçu pour, lors du démarrage du deux-roues (100) à partir de l'arrêt, limiter le couple de moteur à la valeur maximale après un laps de temps (t) après le début de la conduite.

11. Deux-roues comprenant l'appareil de commande (105) selon l'une des revendications 6 à 10.
